# EUROPÄISCHE PATENTSCHRIFT

(11) **EP 2 935 915 B1**
(45) Veröffentlichungstag und Bekanntmachung des Hinweises auf die Patenterteilung: **21.09.2016**
(21) Anmeldenummer: 13794860.0
(22) Anmeldetag: 18.11.2013
(51) Int. Cl.: F16C 11/06

(54) **GELENKEINRICHTUNG FÜR EIN KRAFTFAHRZEUG**
PIVOT JOINT DEVICE FOR A VEHICLE
DISPOSITIF D'ARTICULATION POUR UNN VÉHICULE

(30) Priorität: 19.12.2012 DE 102012223790
(43) Veröffentlichungstag der Anmeldung: 28.10.2015
(73) Patentinhaber: ZF Friedrichshafen AG, 88046 Friedrichshafen (DE)
(72) Erfinder: BRUNNEKE, Hans-Gerd, 49124 Georgsmarienhütte (DE)
(86) Internationale Anmeldenummer: PCT/EP2013/074004
(87) Internationale Veröffentlichungsnummer: WO 2014/095189

(56) Entgegenhaltungen:
- WO-A2-2008/014509
- DE-C1- 4 112 791
- JP-U- H01 173 520
- US-A- 4 553 760
- US-A- 5 066 159

## Beschreibung

Die Erfindung betrifft eine Gelenkeinrichtung, umfassend zumindest einen Gelenkzapfen und zumindest ein diesen ganz oder teilweise umgreifendes Gehäuse, wobei der Gelenkzapfen und das Gehäuse relativ zueinander zumindest schwenkbeweglich sind und ein zwischen diesen Teilen befindlicher Spalt über eine in jeder Relativlage der Teile zueinander wirksame Dichtungseinrichtung verschlossen ist, nach dem Oberbegriff des Anspruchs 1 oder des Anspruchs 6.

DE 4 112 791 C1 offenbart die Merkmale des Oberbegriffs von Anspruch 1. Bei Gelenkeinrichtungen dieser Art, die beispielsweise als Kugelgelenke ausgebildet sind, ist es häufig erforderlich, eine gegen Schmutz und Wasser wirksame Abdichtung vorzusehen, um eine Störung der Beweglichkeit der Teile gegeneinander, etwa durch Abrieb oder Ausspülen eines Schmiermittels, wirksam und dauerhaft zu verhindern.

Hierfür sind als Dichtungseinrichtungen Manschetten bekannt, die etwa mittels eins ersten Spannrings von radial außen auf das Gehäuse gedrückt und mittels eines zweiten Spannrings von radial außen auf einen axial nach außen versetzten Halsbereich des Zapfens gedrückt werden. Derartige Dichtungseinrichtungen sind können daher leicht im Aufprallbereich von kleinen Steinen, Sand und ähnlichen durch die Fahrgeschwindigkeit mit hoher Kraft wirksamen Störkörpern liegen. Eine weitere Beschädigungsgefahr besteht durch Hochdruckreiniger, die oft ohne Bedacht auch zur Reinigung derart empfindlicher Bereiche eingesetzt werden. Zudem erfordern die zusätzlichen Befestigungselemente weiteren Montageaufwand und bergen die Gefahr, dass sie sich mit der Zeit lösen oder ebenfalls von außen beschädigt werden.

Der Erfindung liegt das Problem zugrunde, hier eine Verbesserung zu erreichen.

Die Erfindung löst dieses Problem durch eine Kraftfahrzeug mit den Merkmalen des Anspruchs 1. Zu vorteilhaften Ausgestaltungen und Weiterbildungen der Erfindung wird auf die weiteren Ansprüche 2 bis 14 verwiesen.

Mit der Erfindung ist in Ausbildung nach Anspruch 1 dadurch, dass die Dichtungseinrichtung radial außenseitig an einem inneren Wandungsbereich des Gehäuses anliegt und abgestützt ist, erreicht, dass das Gehäuse nach außen überragende Befestigungselemente für die Dichtungseinrichtung entbehrlich sind. Das massive und unempfindliche Gehäuse stellt daher den radial am weitesten außen liegenden Bereich der Dichtungsbefestigung und kann auftreffende Steine, Wasser und andere äußere Einflüsse abfangen, so dass eine hohe Langzeitstabilität erreicht ist. Zudem kann die Montage von weiteren äußeren Spannringen oder ähnlichem entfallen, wodurch die Herstellungskosten gesenkt werden können. Die Anlage der Dichtungseinrichtung erfolgt direkt und unmittelbar. Der Teileaufwand ist dadurch gering. Zudem ist nur ein minimaler Bauraum erforderlich.

Wenn günstig der radial außenseitig liegende Randbereich der Dichtungseinrichtung von einem nach außen vorspannenden Element beaufschlagbar ist, kann eine hohe radiale Vorspannung für ein Pressen der Dichtung von innen an das Gehäuse erreicht werden.

Insbesondere kann das außen vorspannende Element ein innerhalb oder außerhalb des Dichtungsmaterials der Dichtungseinrichtung liegender Spannring sein. Auch ein Einvulkanisieren etwa eines Metallrings ist möglich.

Um eine sichere Halterung für die Dichtungseinrichtung am Gehäuse zu erhalten, kann dort vorteilhaft als Anlagefläche eine Ausklinkung oder eine radial einwärts weisende Nut vorgesehen sein.

Dabei weist günstig die Anlagefläche der Dichtungsfläche am Gehäuse eine axiale Erstreckung von zumindest 8 Millimetern auf, so dass ein Abrutschen der Dichtung auch dauerhaft zuverlässig vermieden ist.

In der Ausbildung nach Anspruch 6 ist dadurch, dass die Dichtungseinrichtung zumindest im Wesentlichen in einer von dem Gehäuse nach außen abgeschirmten Schutzlage gehalten ist, erreicht, dass das Gehäuse die Dichtungseinrichtung über zumindest nahezu ihren gesamten Verlauf von radial außen abschirmt und somit vor Beschädigungen durch von außen auftreffende Partikel oder Feuchtigkeit schützt - ebenso wie vor UV-Strahlung.

Insbesondere kann die Dichtungseinrichtung hierfür von ihrer Anlage am Gehäuse ohne nach außen überragende axiale Erstreckung innerhalb der Projektion der Anlagefläche verlaufen. Damit ist dann günstig die Dichtungseinrichtung in ihrer bezüglich des Zapfens axialen Ausdehnung vollständig innerhalb der Kontur des Gehäuses gelegen.

Hierfür kann dann vorteilhaft die Dichtungseinrichtung mit ihrem radial innenseitig und mit ihrem radial außenseitig liegenden Randbereich axial auf derselben Höhe liegen.

Die Dichtungseinrichtung kann des Weiteren günstig an ihrem radial innenseitig liegenden Randbereich hinter einer am Zapfen ausgeformten Kante lagegesichert sein, so dass die Dichtungseinrichtung nicht vom Zapfen abrutschen kann.

Insbesondere ist an dieser Stelle sowie auch am radial außenseitig liegenden Randbereich der Dichtung eine formschlüssige Lagesicherung am Zapfen bzw. am Gehäuse möglich.

Um eine hinreichende Bewegbarkeit der Gelenkeinrichtung auch ohne eine nennenswerte axiale Erstreckung der Dichtungseinrichtung zu ermöglichen, kann diese sehr günstig aus einem gummielastischen Material gebildet sein und zwischen ihrem radial innenseitig und ihrem radial außenseitig liegenden Randbereich mäandrierend mit axial aufwärts und abwärts weisenden Bereichen verlaufen.

Ein Kraftfahrzeug mit zumindest einer Gelenkeinrichtung nach einem der Ansprüche 1 bis 12 ist gesondert beansprucht.

Insbesondere kann ein solches Kraftfahrzeug ein Nutzkraftwagen (NKW) sein, wobei eine solche Gelenkeinrichtung u. a. zur Führung einer Achse dieses Kraftfahrzeuges über einen oder mehrere mittelbar oder unmittelbar von einem oder mehreren Rahmenteilen zur Gelenkeinrichtung führenden Lenker(n) dient. Typisch kann hierzu eine Dreiecklenkeranordnung zur Abstützung einer Hinterachse erfindungsgemäß ausgebildet sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Draufsicht auf einen Nutzkraftwagen mit beispielhaft einer über zwei Dreieckslenker an einem Hinterachsdifferential angreifenden Gelenkeinrichtung,

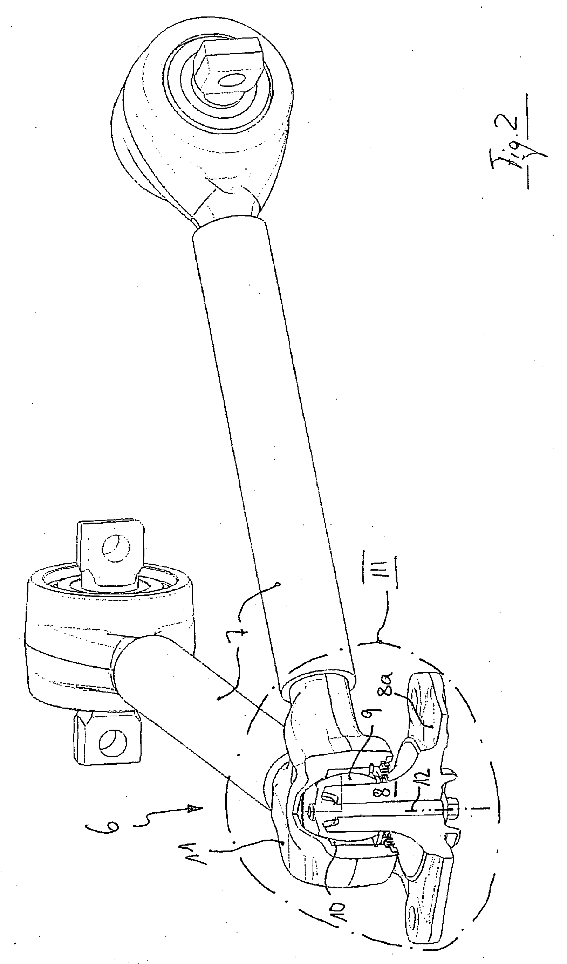

- Fig. 2: eine perspektivische Detailansicht von schräg oben einer Gelenkeinrichtung als Dreieckslenker mit einem zentralen Gehäuse, das einen von einer Flanschplatte aufragenden Zapfen übergreift,

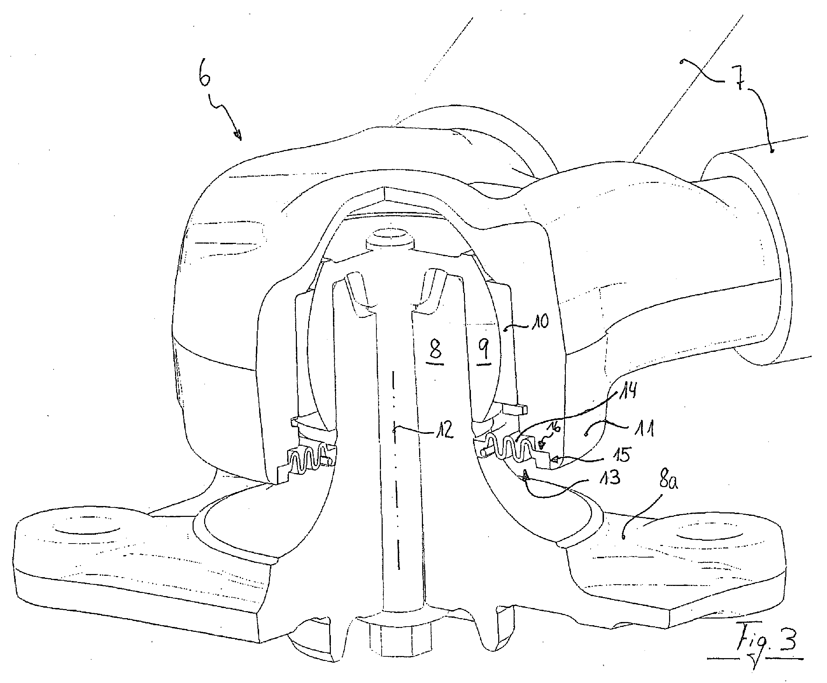

- Fig. 3: einen Ausschnittsdarstellung der Gelenkeinrichtung, etwa entsprechend dem Detail III in Figur 2,

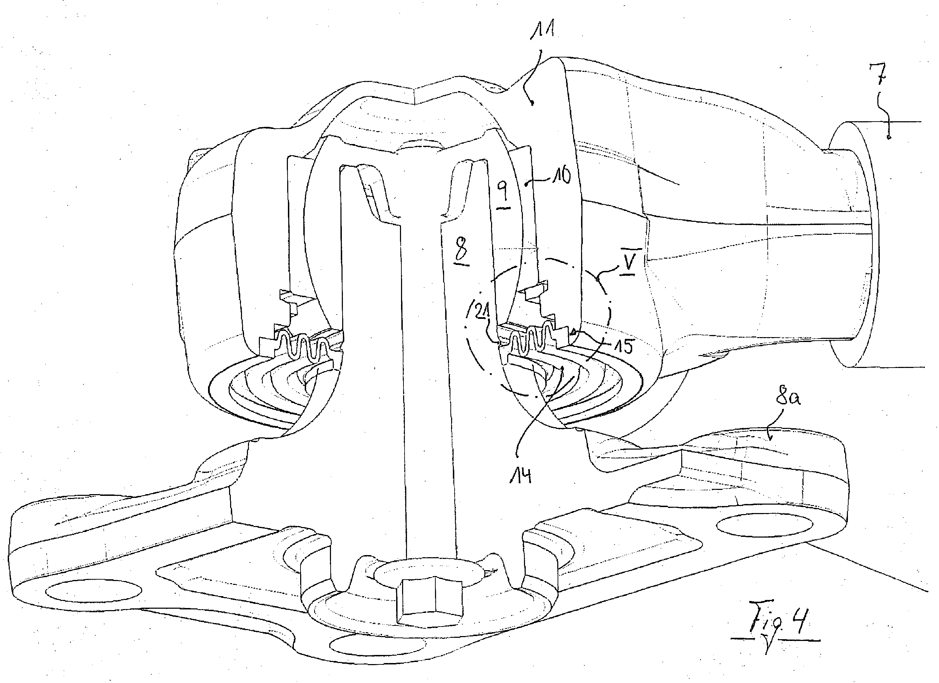

- Fig. 4: eine ähnliche Ansicht wie Figur 3, jedoch aus einer leicht von unten gesehenen Perspektive,
- Fig. 5: einen Detailausschnitt der Gelenkeinrichtung, etwa entsprechend dem Detail V in Figur 4, jedoch mit separatem Stützring,

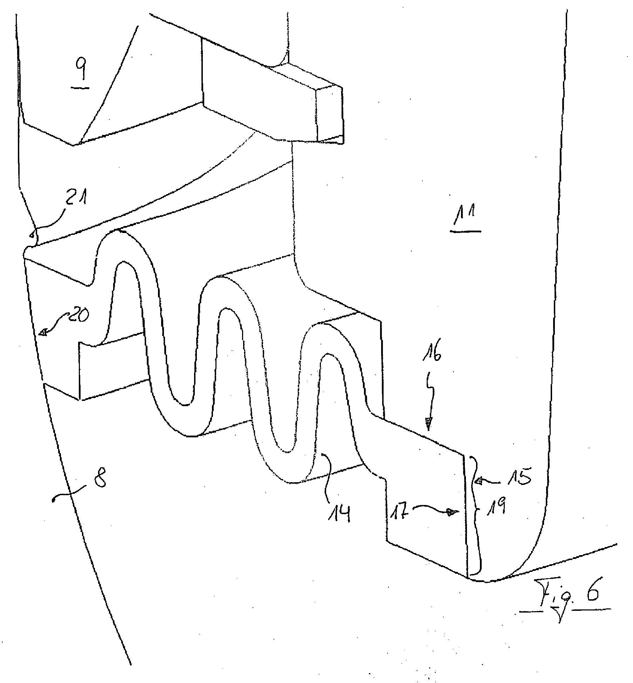

- Fig. 6: eine ähnliche Darstellung wie Figur 5, jedoch aus einer eher von oben gesehenen Perspektive und mit einem am Zapfen einstückig angeformten Haltering, unter den die Dichtungseinrichtung geklemmt ist,
- Fig. 7: eine ähnliche Ansicht wie Figur 6, wobei hier jedoch am radial inneren Randbereich ein von außen auf die Dichtungseinrichtung wirkender erster Spannring und am radial äußeren Randbereich ein einvulkanisierter zweiter Spannring vorgesehen ist.

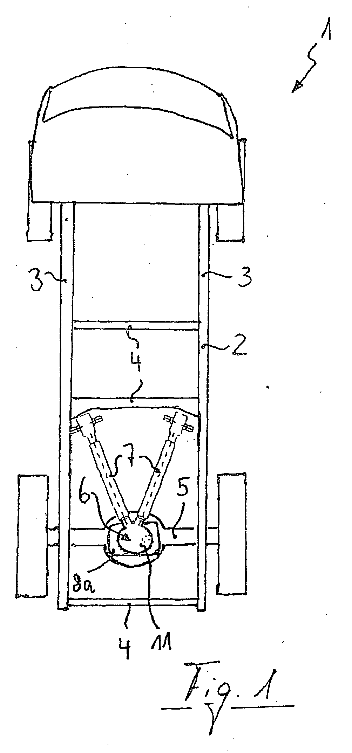

Das in Figur 1 nur schematisch dargestellte Kraftfahrzeug 1 bildet hier einen Nutzkraftwagen (NKW) aus und weist einen Fahrzeugrahmen 2 auf. Ein solcher Fahrzeugrahmen 2 kann typisch zwei seitliche Längsträger 3 und mehrere Querträger 4 umfassen und insgesamt unterschiedlich ausgebildet sein. An dem Fahrzeugrahmen 2 ist zumindest eine Achse 5, zum Beispiel eine Hinterachse, gehalten.

Auch beispielsweise ein Baufahrzeug oder ein Offroadfahrzeug kann erfindungsgemäß ausgebildet sein.

Das gezeichnete Kraftfahrzeug 1 ist mit zumindest einer Gelenkeinrichtung 6 versehen; auch mehrere Gelenkeinrichtungen der unten noch näher beschriebenen Art sind möglich. Die hier gezeichnete Gelenkeinrichtung 6 dient zur Führung einer Achse 5 dieses Kraftfahrzeuges 1. Hierfür sind ein oder mehrere (hier zwei) mittelbar oder unmittelbar von einem oder mehreren Rahmenteilen 3, 4 zur Gelenkeinrichtung 6 führende Lenker 7 in einer Dreiecksanordnung vorgesehen. Auch eine X-förmige Lenkeranordnung mit einer Vierpunktanbindung wird hier oft verwendet. Auch weitere mit dem Fahrwerk in Verbindung stehende Teile können über erfindungsgemäße Gelenkeinrichtungen 6 angebunden sein.

Die Gelenkeinrichtung 6 selbst umfasst hier einen axial erstreckten Gelenkzapfen 8, der eine im Wesentlichen kugelförmige Erweiterung 9 aufweist. Diese kann integral am Gelenkzapfen 8 ausgebildet sein oder eine separate Baueinheit bilden und gegenüber einer aufnehmenden Gelenkschale 10 nach Art eines Kugelgelenks schwenk- und kippbeweglich sein. Die Gelenkschale 10 ist fest von einem äußeren Gehäuse 11 der Gelenkeinrichtung 6 übergriffen, so dass die Beweglichkeit der Gelenkschale 10 gegenüber der kugelförmigen Erweiterung 9 gleichzeitig eine Relativbeweglichkeit - hier in seitlich zur Fahrtrichtung F orientierter Schwenkrichtung und in in Fahrtrichtung F liegender Kipprichtung - zwischen Gehäuse 11 und Gelenkzapfen 8 begründet. Auch ein Verdrehen um die Achse 12 kann zwischen Gehäuse 11 und Gelenkzapfen 8 möglich sein. Derartige Gelenkeinrichtungen 6 können auch beispielsweise in Radgelenken oder bei Vorderachsführungen vorgesehen sein.

Der Gelenkzapfen 8 erweitert hier beispielhaft nach unten hin in einen plattenförmigen Flansch 8a, der zum Beispiel auf ein Differentialgehäuse einer Hinterachse 5 aufgesetzt ist. Der Flansch 8a kann auch eine gegenüber dem Zapfen 8 separate Baueinheit bilden, bzw. der Zapfen 8 kann auch eine gänzlich andere Anbindung an weitere Teile sowie auch eine abweichende Einbaulage aufweisen.

Das Gehäuse 11 umgreift den Gelenkzapfen 8 hier radial vollständig; auch ein nur teilweises Umgreifen ist alternativ möglich. Ein wegen der Relativbeweglichkeit zwischen Gehäuse 11 und Zapfen 8 erforderlicher Spalt 13 ist über eine in jeder Relativlage der Teile 8, 11 zueinander wirksame Dichtungseinrichtung 14 verschlossen. Diese Dichtungseinrichtung 14 liegt dabei zumindest radial außenseitig (17) an einem inneren Wandungsbereich 15 des Gehäuses an und ist dort abgestützt. Zusätzlich kann dieser äußere Rand der Dichtungseinrichtung 14 auch axial an einem der Dichtung gegenüber gelegenen Wandungsbereich 16 anliegen und auch ebenfalls abgestützt sein.

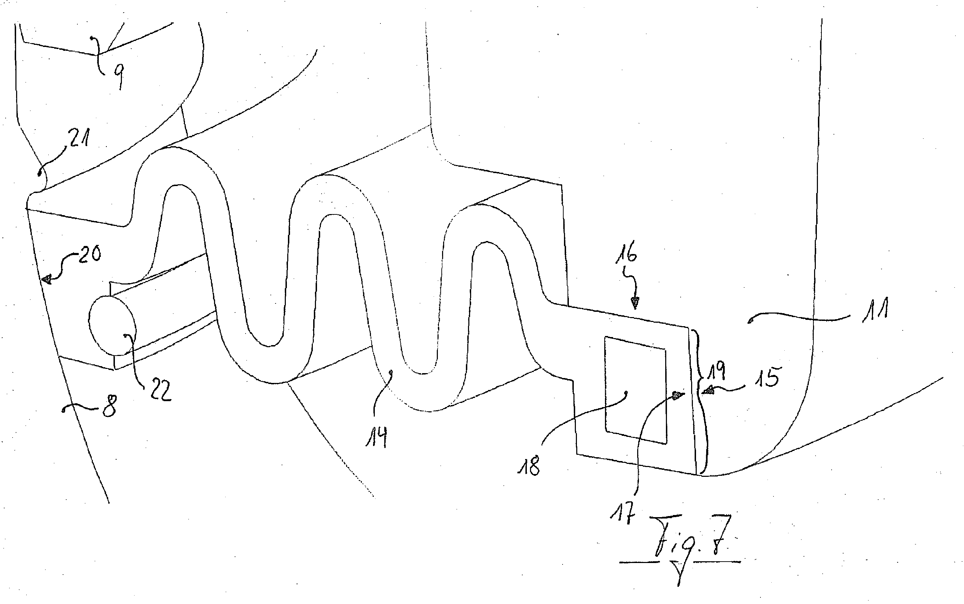

Der radial außenseitig liegende Randbereich 17 der Dichtungseinrichtung 14 von einem nach außen vorspannenden Element 18 beaufschlagbar sein. Hierfür kommt ein innerhalb oder außerhalb des Dichtungsmaterials der Dichtungseinrichtung 14 liegender Spannring 18 in Betracht. In Figur 7 ist ein solcher Spannring 18 beispielhaft als einvulkanisierter Ring im Material der Dichtung 14 eingezeichnet. Neben dem Verspannen kann beispielsweise auch ein Verkleben der Dichtung 14 an den Flächen 15 und 16 möglich sein.

Als Anlagefläche 15, 16 für die Dichtungseinrichtung 14 ist hier beispielhaft eine Ausklinkung am axial unteren Gehäuserand vorgesehen; auch eine radial einwärts weisende Nut in dem Gehäuse 11 wäre alternativ möglich. Im hier gezeigten Beispiel weist die Anlagefläche 15 Anlagefläche am Gehäuse 11 eine axiale Erstreckung 19 von zumindest 8 Millimetern auf. Je nach Gelenkgrößer kann diese axiale Erstreckung 19 auch mehrere Zentimeter betragen. In jedem Fall ist die Dichtung 14 an dieser Anlagefläche zumindest nahezu vollständig eingefasst, so dass sie axial nicht - wie hier gezeichnet - oder nur mit einem Bruchteil ihrer Erstreckung vorsteht und somit gut geschützt und abgestützt ist.

Im gezeichneten Ausführungsbeispiel ist nicht nur der radial äußerer Rand 17 der Dichtung 14 vom Gehäuse 11 eingefasst, sondern die Dichtungseinrichtung 14 ist wie in Anspruch 6 insgesamt im wesentlichen in einer von dem Gehäuse 11 nach außen abgeschirmten Schutzlage gehalten.

Hier ist dabei die Dichtungseinrichtung 14 in ihrer bezüglich des Zapfens 8 axialen Ausdehnung vollständig innerhalb der Kontur des Gehäuses 11 gelegen, ragt also axial nicht über diese in einen freien Bereich hinaus. Dadurch ergibt sich ein besonders effektiver Schutz etwa gegen Sand und Steine, die mit einer Krafteinwirkung entgegen der Fahrtrichtung F auf den Zapfen 8 treffen können, oder gegen einen horizontal und radial einwärts auf den Zapfen 8 gerichteten Hochdruckreiniger.

Dabei kann, wie hier gezeichnet, die Dichtungseinrichtung 14 mit ihrem radial innenseitig (20) und mit ihrem radial außenseitig liegenden Randbereich 17 axial bezüglich des Zapfens 8 auf derselben Höhe liegen.

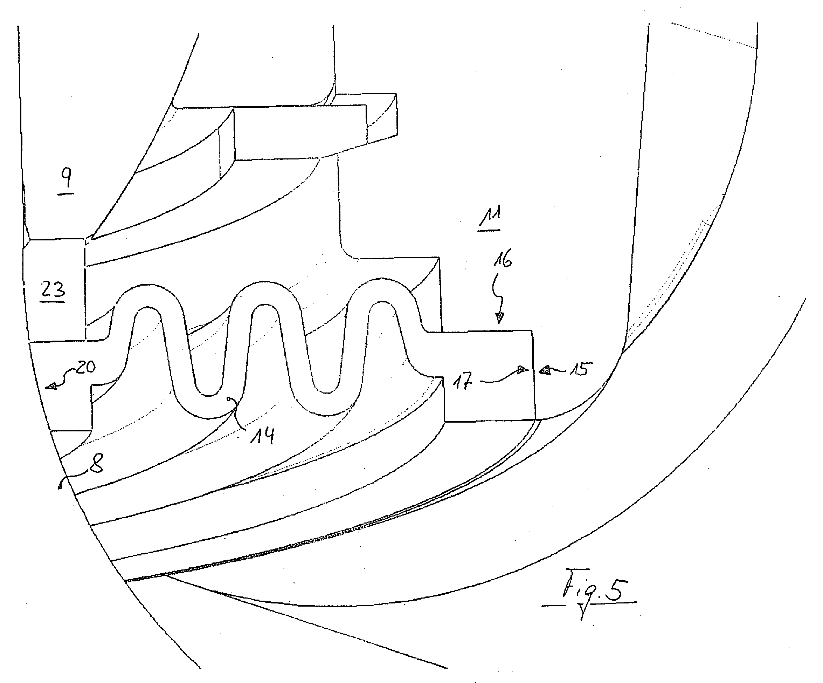

An ihrem radial inneren Randbereich 20 ist die Dichtungseinrichtung 14 beispielsweise hinter einer am Zapfen 8 ausgeformten Kante 21 lagegesichert, die etwa in Figur 7 gut zu erkennen ist. Diese Kante 21 kann nahezu sägezahnförmig ausgebildet sein, so dass eine einmal unterhalb der Kante 21 eingerastete Dichtung 14 nicht wieder zurück kann. Andererseits kann die Dichtung 14 mit ihrem Randbereich 20 aber auch nicht weiter nach unten rutschen, da der Zapfen 8 dorthin erweitert. Auch hier kann ein Verkleben und/oder ein weiterer Spannring 22 zusätzlich oder alternativ vorgesehen sein. Statt der nasenförmigen, umlaufenden Kante 21 kann auch separater Haltering 23 vorgesehen sein, der beispielhaft in Figur 5 eingezeichnet ist und die Dichtung axial nach unten, zum erweiternden Bereich des Zapfens 8 hin verspannt.

Insgesamt ist es für hohe Belastungen vorteilhaft, wenn die Dichtungseinrichtung mit ihrem radial innenseitig 20 und mit ihrem radial außenseitig liegenden Randbereich 17 am Zapfen 8 bzw. am Gehäuse 11 zumindest formschlüssig lagegesichert ist. Ein Kraftschluss, etwa durch Verkleben, kann dann zusätzlich vorgesehen sein. Unterhalb des äußeren Endes 17 kann beispielsweise auch ein Simmering zur axialen Sicherung vorgesehen sein, der hier nicht eingezeichnet ist.

Wie in den Figuren zu erkennen ist, verläuft die Dichtungseinrichtung 14 zwischen ihrem radial innenseitig 20 und mit ihrem radial außenseitig liegenden Randbereich 17 mäandrierend mit axial aufwärts und abwärts weisenden Bereichen, so dass ein Teil der Elastizität der Dichtung über deren Geometrie erreicht wird. Zusätzlich ist die Dichtungseinrichtung 14 zumindest im Wesentlichen aus gummielastischem Material gebildet, die Härte kann dabei variieren. Auch kann die Dichtung als 2K-Bauteil gespritzt sein, so dass die Randbereiche 17, 20 eine höhere Steifigkeit aufweist als der radial dazwischen gelegene Bereich, der dann leicht elastisch verformbar ist.

**Bezugszeichen**

| | | | |
|---|---|---|---|
| 1 | Kraftfahrzeug, | 20 | radial innerer Bereich, |
| 2 | Fahrzeugrahmen, | 21 | Kante am Zapfen, |
| 3 | Längsträger, | 22 | separater Sicherungsring |
| 4 | Querträger, | 23 | separater Haltering |
| 5 | Fahrzeugachse, | | |
| 6 | Gelenkeinrichtung, | | |
| 7 | Lenker, | | |
| 8 | Gelenkzapfen, | | |
| 8a | Flansch, | | |
| 9 | kugelförmige Erweiterung, | | |
| 10 | Gelenkschale, | | |
| 11 | Gehäuse, | | |
| 12 | Gelenkachse, | | |
| 13 | Spalt, | | |
| 14 | Dichtungseinrichtung, | | |
| 15 | radialer Wandungsbereich, | | |
| 16 | axialer Wandungsbereich, | | |
| 17 | außenseitiger Randbereich, | | |
| 18 | Spannring, | | |
| 19 | axiale Erstreckung, | | |

## Patentansprüche

1. Gelenkeinrichtung (6), umfassend einen axial erstreckten Gelenkzapfen (8) und ein diesen ganz oder teilweise radial umgreifendes Gehäuse (11), wobei der Gelenkzapfen (8) und das Gehäuse (11) relativ zueinander zumindest schwenk- bzw. drehbeweglich sind und ein zwischen diesen Teilen befindlicher Spalt (13) über eine in jeder Relativlage der Teile (8;11) zueinander wirksame Dichtungseinrichtung (14) verschlossen ist, wobei die Dichtungseinrichtung (14) radial außenseitig an einem inneren Wandungsbereich (15) des Gehäuses (11) anliegt und abgestützt ist und an ihrem radial innenseitig liegenden Randbereich (20) unter einer am Gelenkzapfen (8) ausgeformten Kante (21) oder einem separaten Halterring (23) am Gelenkzapfen formschlüssig lagegesichert ist, **dadurch gekennzeichnet, dass** sich der Gelenkzapfen (8) ausgehend von der ausgeformten Kante (21) oder dem separaten Halterring (23) nach unten hin stetig radial in einen plattenförmigen Flansch (8a) erweitert, sodass die Dichtungseinrichtung (14) mit ihrem innenseitig liegenden Randbereich (20) nicht weiter nach unten rutschen kann.

2. Gelenkeinrichtung (6) nach Anspruch 1, **dadurch gekennzeichnet, dass** der radial außenseitig liegende Randbereich (17) der Dichtungseinrichtung (14) von einem nach außen vorspannenden Element (18) beaufschlagbar ist.

3. Gelenkeinrichtung (6) nach Anspruch 2, **dadurch gekennzeichnet, dass** das nach außen vorspannende Element (18) ein innerhalb oder außerhalb des Dichtungsmaterials der Dichtungseinrichtung (14) liegender Spannring ist.

4. Gelenkeinrichtung (6) nach einem der Ansprüche 1 bis 3, **dadurch gekennzeichnet, dass** als Anlagefläche (15) für die Dichtungseinrichtung (14) eine Ausklinkung oder radial einwärts weisende Nut in dem Gehäuse (11) vorgesehen ist.

5. Gelenkeinrichtung (6) nach einem der Ansprüche 1 bis 4, **dadurch gekennzeichnet, dass** die Anlagefläche (15) der Dichtungsfläche (14) am Gehäuse (11) eine axiale Erstreckung von zumindest 8 Millimetern aufweist.

6. Gelenkeinrichtung (6) nach einem der Ansprüche 1 bis 5, **dadurch gekennzeichnet, dass** die Dichtungseinrichtung (14) zumindest im wesentlichen in einer von dem Gehäuse (11) nach radial außen abgeschirmten Schutzlage gehalten ist.

7. Gelenkeinrichtung (6) nach Anspruch 6, **dadurch gekennzeichnet, dass** die Dichtungseinrichtung (14) in ihrer bezüglich des Zapfens (8) axialen Ausdehnung vollständig innerhalb der Kontur des Gehäuses (11) gelegen ist.

8. Gelenkeinrichtung (6) nach einem der Ansprüche 1 bis 7, **dadurch gekennzeichnet, dass** der Flansch (8a) auf ein Differentialgehäuse einer Hinterachse (5) eines Kraftfahrzeugs (1) aufgesetzt ist.

9. Gelenkeinrichtung (6) nach einem der Ansprüche 1 bis 8, **dadurch gekennzeichnet, dass** die Dichtungseinrichtung (14) mit ihrem radial innenseitig (20) und mit ihrem radial außenseitig liegenden Randbereich (17) axial auf derselben Höhe liegt.

10. Gelenkeinrichtung (6) nach einem der Ansprüche 1 bis 9, **dadurch gekennzeichnet, dass** die Dichtungseinrichtung (14) mit ihrem radial außenseitig liegenden Randbereich (17) am Gehäuse (11) zumindest formschlüssig lagegesichert ist.

11. Gelenkeinrichtung (6) nach einem der Ansprüche 1 bis 10, **dadurch gekennzeichnet, dass** die Dichtungseinrichtung (14) zwischen ihrem radial innenseitig (20) und mit ihrem radial außenseitig liegenden Randbereich (17) mäandrierend mit axial aufwärts und abwärts weisenden Bereichen verläuft.

12. Gelenkeinrichtung (6) nach einem der Ansprüche 1 bis 11, **dadurch gekennzeichnet, dass** die Dichtungseinrichtung (14) zumindest im Wesentlichen aus gummielastischem Material gebildet ist.

13. Kraftfahrzeug (1) mit zumindest einer Gelenkeinrichtung (6) nach einem der Ansprüche 1 bis 12.

14. Kraftfahrzeug (1) nach Anspruch 13, **dadurch gekennzeichnet, dass** dieses ein Nutzkraftwagen (NKW) ist und die Gelenkeinrichtung (6) zur Führung einer Achse (5) dieses Kraftfahrzeuges (1) über einen oder mehrere mittelbar oder unmittelbar von einem oder mehreren Rahmenteilen (3;4) zur Gelenkeinrichtung (6) führenden Lenker(n) (7) dient.

## Claims

1. Joint device (6), comprising an axially elongated joint pin (8) and comprising a housing (11) which radially extends entirely or partially around said joint pin, wherein the joint pin (8) and the housing (11) are at least pivotably or rotatably movable relative to one another and a gap (13) situated between said parts is closed by way of a seal device (14) which acts in all relative positions of the parts (8; 11) with respect to one another, wherein the seal device (14) bears and is supported radially at the outside against an inner wall region (15) of the housing (11) and, at its edge region (20) situated radially at the inside, is secured in position on the joint pin in positively locking fashion under an edge (21) formed on the joint pin (8) or under a separate retaining ring (23), **characterized in that** the joint pin (8), in a downward direction proceeding from the formed edge (21) or the separate retaining ring (23), widens radially in continuous fashion into a plate-shaped flange (8a), such that the seal device (14) cannot, by way of its edge region (20) situated at the inside, slip further downward.

2. Joint device (6) according to Claim 1, **characterized in that** the edge region (17), situated radially at the outside, of the seal device (14) can be acted on by an element (18) which imparts an outward preload.

3. Joint device (6) according to Claim 2, **characterized in that** the element (18) which imparts an outward preload is a clamping ring which is situated within or outside the seal material of the seal device (14).

4. Joint device (6) according to one of Claims 1 to 3, **characterized in that**, as an abutment surface (15) for the seal device (14), there is provided a notch or radially inwardly pointing groove in the housing (11).

5. Joint device (6) according to one of Claims 1 to 4, **characterized in that** the abutment surface (15) of the seal surface (14) on the housing (11) has an axial extent of at least 8 mm.

6. Joint device (6) according to one of Claims 1 to 5, **characterized in that** the seal device (14) is held at least substantially in a protected position in which it is shielded radially to the outside by the housing (11).

7. Joint device (6) according to Claim 6, **characterized in that** the seal device (14) is, in terms of its axial extent relative to the pin (8), situated entirely within the contour of the housing (11).

8. Joint device (6) according to one of Claims 1 to 7, **characterized in that** the flange (8a) is mounted onto a differential casing of a rear axle (5) of a motor vehicle (1).

9. Joint device (6) according to one of Claims 1 to 8, **characterized in that** the seal device (14) lies with its edge region (20) situated radially at the inside and with its edge region (17) situated radially at the outside at the same axial height.

10. Joint device (6) according to one of Claims 1 to 9, **characterized in that** the seal device (14) is, by way of its edge region (17) situated radially at the outside, secured in position on the housing (11) at least in positively locking fashion.

11. Joint device (6) according to one of Claims 1 to 10, **characterized in that** the seal device (14), between its edge region (20) situated radially at the inside and with its edge region (17) situated radially at the outside, runs in meandering fashion with axially upwardly pointing regions and axially downwardly pointing regions.

12. Joint device (6) according to one of Claims 1 to 11, **characterized in that** the seal device (14) is formed at least substantially from resiliently elastic material.

13. Motor vehicle (1) having at least one joint device (6) according to one of Claims 1 to 12.

14. Motor vehicle (1) according to Claim 13, **characterized in that** said motor vehicle is a utility vehicle and the joint device (6) serves for the control of an axle (5) of said motor vehicle (1) by way of one or more links (7) which lead indirectly or directly from one or more frame parts (3; 4) to the joint device (6).

## Revendications

1. Dispositif d'articulation (6), comprenant un tourillon d'articulation (8) s'étendant axialement et un boîtier (11) venant en prise radialement complètement ou partiellement autour de celui-ci, le tourillon d'articulation (8) et le boîtier (11) pouvant être déplacés au moins en rotation ou par pivotement l'un par rapport à l'autre et une fente (13) se trouvant entre ces pièces étant fermée par le biais d'un dispositif d'étanchéité (14) actif dans chaque position relative des pièces (8 ; 11) l'une par rapport à l'autre, le dispositif d'étanchéité (14) s'appliquant et étant supporté radialement du côté extérieur contre une région de paroi interne (15) du boîtier (11) et étant fixé en position par engagement par correspondance de formes au tourillon d'articulation au niveau de sa région de bord (20) située radialement du côté intérieur sous une arête (21) façonnée sur le tourillon d'articulation (8) ou sous une bague de retenue séparée (23), **caractérisé en ce que** le tourillon d'articulation (8) s'élargit à partir de l'arête façonnée (21) ou de la bague de retenue séparée (23) vers le bas en continu radialement dans une bride en forme de plaque (8a), de sorte que le dispositif d'étanchéité (14) ne puisse pas glisser davantage vers le bas avec sa région de bord (20) située du côté intérieur.

2. Dispositif d'articulation (6) selon la revendication 1, **caractérisé en ce que** la région de bord (17), située radialement du côté extérieur, du dispositif d'étanchéité (14) peut être sollicitée par un élément (18) exerçant une précontrainte vers l'extérieur.

3. Dispositif d'articulation (6) selon la revendication 2, **caractérisé en ce que** l'élément (18) exerçant une précontrainte vers l'extérieur est une bague de serrage située à l'intérieur ou à l'extérieur du matériau d'étanchéité du dispositif d'étanchéité (14).

4. Dispositif d'articulation (6) selon l'une quelconque des revendications 1 à 3, **caractérisé en ce que** l'on prévoit en tant que surface d'appui (15) pour le dispositif d'étanchéité (14), une encoche ou une rainure orientée radialement vers l'intérieur dans le boîtier (11).

5. Dispositif d'articulation (6) selon l'une quelconque des revendications 1 à 4, **caractérisé en ce que** la surface d'appui (15) de la surface d'étanchéité (14) sur le boîtier (11) présente une étendue axiale d'au moins 8 mm.

6. Dispositif d'articulation (6) selon l'une quelconque des revendications 1 à 5, **caractérisé en ce que** le dispositif d'étanchéité (14) est retenu au moins essentiellement dans une position de protection protégée radialement vers l'extérieur par le boîtier (11).

7. Dispositif d'articulation (6) selon la revendication 6, **caractérisé en ce que** le dispositif d'étanchéité (14) est placé complètement à l'intérieur du contour du boîtier (11) dans son étendue axiale par rapport au tourillon (8).

8. Dispositif d'articulation (6) selon l'une quelconque des revendications 1 à 7, **caractérisé en ce que** la bride (8a) est posée sur un boîtier différentiel d'un essieu arrière (5) d'un véhicule automobile (1).

9. Dispositif d'articulation (6) selon l'une quelconque des revendications 1 à 8, **caractérisé en ce que** le dispositif d'étanchéité (14) est situé axialement à la même hauteur avec sa région de bord (20) située radialement du côté interne et avec sa région de bord (17) située radialement du côté externe.

10. Dispositif d'articulation (6) selon l'une quelconque des revendications 1 à 9, **caractérisé en ce que** le dispositif d'étanchéité (14) est fixé en position au moins par engagement par correspondance de formes avec sa région de bord (17) située radialement du côté externe au niveau du boîtier (11).

11. Dispositif d'articulation (6) selon l'une quelconque des revendications 1 à 10, **caractérisé en ce que** le dispositif d'étanchéité (14) s'étend en méandres avec des zones orientées axialement vers le haut et vers le bas entre sa région de bord (20) située radialement du côté interne et avec sa région de bord (17) située radialement du côté externe.

12. Dispositif d'articulation (6) selon l'une quelconque des revendications 1 à 11, **caractérisé en ce que** le dispositif d'étanchéité (14) est formé au moins essentiellement en un matériau ayant l'élasticité du caoutchouc.

13. Véhicule automobile (1) comprenant au moins un dispositif d'articulation (6) selon l'une quelconque des revendications 1 à 12.

14. Véhicule automobile (1) selon la revendication 13, **caractérisé en ce que** celui-ci est un véhicule utilitaire (NKW) et le dispositif d'articulation (6) sert au guidage d'un essieu (5) de ce véhicule automobile (1) par le biais d'un ou de plusieurs bras oscillants (7) conduisant directement ou indirectement depuis une ou plusieurs pièces de châssis (3 ; 4) au dispositif d'articulation (6).
